(19) Europäisches Patentamt
European Patent Office
Office européen des brevets

(11) **EP 4 279 205 A1**

(12) **EUROPÄISCHE PATENTANMELDUNG**

(43) Veröffentlichungstag:
**22.11.2023 Patentblatt 2023/47**

(21) Anmeldenummer: **22174451.9**

(22) Anmeldetag: **19.05.2022**

(51) Internationale Patentklassifikation (IPC):
*B22F 10/28* (2021.01)     *B22F 10/64* (2021.01)
*C21D 1/25* (2006.01)     *C21D 1/26* (2006.01)
*C21D 6/04* (2006.01)     *C22C 33/02* (2006.01)
*C22C 38/00* (2006.01)     *C22C 38/02* (2006.01)
*C22C 38/22* (2006.01)     *C22C 38/38* (2006.01)
*B33Y 10/00* (2015.01)     *B33Y 40/20* (2020.01)
*B33Y 70/00* (2020.01)

(52) Gemeinsame Patentklassifikation (CPC):
**C22C 33/0285; B22F 10/28; B22F 10/64;
B33Y 10/00; B33Y 40/20; B33Y 70/00; C21D 1/25;
C21D 1/26; C21D 6/04; C22C 38/001; C22C 38/02;
C22C 38/22; C22C 38/38;** B22F 1/05

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Deutsche Edelstahlwerke
Specialty Steel GmbH & Co. KG
58452 Witten (DE)**

(72) Erfinder:
• **Mohr, Andreas
45131 Essen (DE)**

• **Hill, Horst
47929 Grefrath (DE)**
• **Hoeren, Karlheinz P. J.
47798 Krefeld (DE)**
• **Conrads, Janosch
45968 Gladbeck (DE)**

(74) Vertreter: **Cohausz & Florack
Patent- & Rechtsanwälte
Partnerschaftsgesellschaft mbB
Bleichstraße 14
40211 Düsseldorf (DE)**

(54) **STAHLPULVER, STAHL FÜR DIE ERZEUGUNG EINES STAHLPULVERS, VERWENDUNG EINES STAHLS ZUR ERZEUGUNG EINES STAHLPULVERS UND VERFAHREN ZUR HERSTELLUNG EINES BAUTEILS AUS EINEM STAHLPULVER**

(57) Die Erfindung schlägt ein Stahlpulver für eine additive Fertigung eines Stahlbauteils vor, das die Erzeugung von hinsichtlich ihrer Härte, Verschleißbeständigkeit und Anlassbeständigkeit optimierten Bauteilen in einem additiven Verfahren auf konventionellen Fertigungsanlagen ermöglicht. Dazu ist das Stahlpulver erfindungsgemäß aus Stahlpartikeln eines Stahls gebildet, der in Masse-%, aus C: 0,1 - 0,5 %, N:0,1 - 0,5 %, Si: $\leq$ 0,6 %, Mn: 1,0 - 5,0 %, Cr: 11,5 - 15,0 %, Mo: 0,5 - 2,5 %, und als Rest aus Eisen und stahltypischen Verunreinigungen besteht, die in Summe höchstens 0,6 Masse-% betragen und zu den bis zu 0,05 % P und bis zu 0,05 % S zählen. Ein aus einem erfindungsgemäßen Stahlpulver durch additive Fertigung erzeugtes Bauteil wird optional einer Tiefkühlung und/oder einer Anlassbehandlung unterzogen, um seine mechanischen Eigenschaften für den jeweiligen Einsatzzweck zu optimieren. Die Erfindung betrifft ferner einen Stahl für die Erzeugung eines Stahlpulvers zur Herstellung von Stahlbauteilen durch ein additives Verfahren sowie die Verwendung des Stahls zur Erzeugung von Stahlpartikeln eines Stahlpulvers zur Herstellung von Stahlbauteilen durch ein additives Verfahren.

**Beschreibung**

Die Erfindung betrifft

-  ein Stahlpulver für eine additive Fertigung eines Stahlbauteils,

-  ein Stahl für die Erzeugung eines solchen Stahlpulvers,

-  die Verwendung eines Stahls zur Erzeugung eines solchen Stahlpulvers sowie

-  ein Verfahren zur Herstellung eines Stahlbauteils in einem additiven Verfahren, bei dem in einem mehrfach wiederholten Arbeitsablauf auf einer Heizplatte zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, wobei das auf diese Weise abschnittsweise wachsende Bauteil während der Herstellung mittels der Heizplatte auf einer Temperatur gehalten wird, die mindestens 20°C und höchstens 225 °C beträgt.

Wenn nachfolgend "%"-Angaben zu Stahlzusammensetzungen gemacht werden, so beziehen diese sich jeweils auf die Masse (Angabe in "Masse-"), soweit nicht ausdrücklich etwas anderes genannt ist.
Die Anteile bestimmter Bestandteile am Gefüge eines Stahlwerkstoffs oder eines Stahlbauteils sind im vorliegenden Text in Volumen-% ("Vol.-%") angegeben, soweit nicht ausdrücklich etwas anderes vermerkt ist.
Genauso sind die Anteile, die die verschiedenen Partikel am Gesamtvolumen des erfindungsgemäßen Pulvers einnehmen, jeweils in Vol.-% angegeben, soweit nichts anderes ausdrücklich vermerkt ist.
Die hier in HRC angegebenen Härtewerte sind das Ergebnis einer Härteprüfung nach Rockwell, die gemäß DIN EN ISO 6508-1: 2016-12 durchgeführt worden ist.
Die Herstellung von aus Stahlpartikeln bestehenden Pulvern kann in bekannter Weise durch Verdüsen oder durch eine mechanische Zerkleinerung, wie Nassmahlen, erfolgen. Ebenso ist in an sich ebenfalls bekannter Weise ein mechanisches Legieren von Elementarpulvern möglich, die in den hierzu notwendigen Korngrößen bereitgestellt und in der erfindungsgemäßen Legierungsvorschrift entsprechenden Mengen miteinander vermischt werden.
Unter dem Begriff "additive Fertigungsverfahren" oder kurz "additive Fertigung" werden alle Herstellverfahren zusammengefasst, bei denen ein Werkstoff zur Erzeugung eines Bauteils hinzugefügt wird. Dieses Hinzufügen erfolgt in der Regel schichtweise. "Additive Herstellverfahren", die in der Fachsprache oft auch als "generative Verfahren" oder allgemein als "3D-Drucken" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen.
Das additive Fertigungsprinzip ermöglicht es, geometrisch komplexe Strukturen herzustellen, die mit konventionellen Fertigungsverfahren, wie den schon genannten spanabhebenden Verfahren oder Ur- und Umformverfahren (Gießen, Schmieden), nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv).
Nähere Definitionen der Verfahren, die unter dem Oberbegriff "Additive Verfahren" zusammengefasst sind, finden sich beispielsweise in den VDI-Richtlinien 3404 und 3405.
Die Verarbeitung von Stahlpulvern in der additiven Fertigung ist heute prinzipiell möglich. Für die Erzeugung der Partikel hierzu geeigneter Stahlpulver werden dabei üblicherweise Stähle eingesetzt, die eine gute Schweißbarkeit aufweisen. Dies sind Stähle mit Kohlenstoffgehalten unter 0,25 Masse-%, vorzugsweise unter 0,20 Masse-%, wobei sich Stähle mit minimierten, im Verunreinigungsbereich liegenden Kohlenstoffgehalten von unter 0,03 Masse-% als besonders geeignet herausgestellt haben.
Stähle mit einem Kohlenstoffgehalt von mindestens 0,25 Masse-% weisen in der Regel eine höhere Härte und Verschleißbeständigkeit auf, sind jedoch weniger korrosionsstabil und schlechter schweißbar. Um die Korrosionsbeständigkeit dieser Stähle zu erhöhen wird üblicherweise Chrom hinzulegiert. Chrom bildet allerdings aufgrund der hohen Affinität zu Kohlenstoff chromreiche Karbide, so dass ein Teil des Chroms nicht mehr für die Bildung der Korrosionsschutzschicht zur Verfügung steht. Durch die Bildung chromreicher Karbide sinkt auch der Kohlenstoffgehalt der Stahlmatrix, was sich negativ auf die Härte des Stahls auswirkt. Es ist bekannt, dass das Zulegieren von Nickel, Mangan oder Stickstoff dazu beitragen kann, dass Stahl mit höheren Kohlenstoffgehalten von mindestens 0,25 Masse-% auch bei hohen Chromgehalten eine gute Härtbarkeit aufweist. Das Zulegieren von Stickstoff wird allerdings wegen der deutlich teureren Herstellung selten verwendet. Aufgrund der geringen Löslichkeit des Stickstoffs im flüssigen Eisen, muss die Schmelze über druckunterstütztes Aufsticken auf die gewünschte chemische Zusammensetzung legiert werden. Hierzu werden spezielle Ofentechnologien benötigt, die die Herstellung entsprechend teuer machen. Ein bekannter stickstofflegierter Stahl ist der unter der Werkstoffnummer 1.4108 in der Stahl Eisenliste geführte Stahl, der aus, in Masse-%, 0,25 - 0,35 % C, 0,3 - 0,4 % N, 14,0 - 16,0 % Cr, 0,85 - 1,1 % Mo, und Rest Fe und unvermeidbaren Verunreinigungen besteht.

Eine generelle Herausforderung bei der Verarbeitung von Stahlpulvern in der additiven Fertigung besteht darin, dass die dabei jeweils vom Elektronen- oder Laserstrahl, typischerweise unter Vakuum, erfasste Pulverportion sehr schnell aufgeschmolzen und das so gebildete kleine Schmelzenvolumen anschließend unter Anbindung an den zuvor schon verfestigten Abschnitt des Bauteils rasch abgekühlt wird. In Folge dieser schnellen, prozessbedingt hohen Abkühlrate mit sich bringende Abkühlung kommt es zu hohen thermischen Spannungen, die insbesondere bei Stählen mit höheren Kohlenstoffgehalten von 0,25 Masse-% und mehr zu Rissen im Bauteil führen können.

Bei der konventionellen schmiedetechnischen Verarbeitung der voranstehend genannten Stähle können lokale, thermisch bedingt auftretende Spannungen durch plastische Verformungen ausgeglichen werden und so die Gefahr der Rissbildung minimiert werden. Diese Möglichkeit ist bei der additiven Herstellung von Bauteilen jedoch regelmäßig nicht gegeben.

Um die bei der additiven Verarbeitung von Stahlpulvern auftretenden thermischen Spannungen zu minimieren, erfolgt in der Praxis der schichtweise Aufbau des jeweiligen Bauteils auf einer Heizplatte, die in der Fachsprache auch als "Heizbett" bezeichnet wird. Die Heizplatte wird dabei so stark beheizt, dass das Bauteil während des Fertigungsvorgangs auf einem Temperaturniveau gehalten wird, bei dem zu starke Temperaturdifferenzen zwischen der jeweils aus dem aufgetragenen Pulver gebildeten Schmelze und dem schon verfestigten Teil des Bauteils vermieden und damit einhergehend die Ausprägung unerwünschter Gefügebestandteile im Bauteil vermieden wird.

Der über die Heizplatte erfolgende Wärmeeintrag in das Bauteil wird dadurch erschwert, dass Stahlpulver in der Regel eine gegenüber aus demselben Stahl, jedoch in konventioneller Massivumformung gefertigten Bauteilen deutlich verminderte Wärmeleitfähigkeit besitzen. Dies bedingt, dass in der Praxis die Wahl höherer Heiztemperaturen der Heizplatte bei der Verarbeitung von Stahlpulvern, die zur Vermeidung von Rissbildung im aus ihnen erzeugten Bauteil eine stärkere Beheizung erfordern, nur bis zu einer Bauhöhe von typischerweise weniger als 200 mm zu verbesserten Resultaten führt. Gleichzeitig besteht bei der praktischen additiven Verarbeitung von Stahlpulvern in einer Umgebung, in der Temperaturen herrschen, die dauerhaft über 200 °C liegen, die Gefahr, dass sich die Qualität des Pulvers aufgrund von Oxidation verschlechtert, die vor seinem Auftreffen auf das Bauteil eintritt. Darüber hinaus benötigt das Aufheizen auf derart hohe Temperaturen Zeit, in der keine additive Fertigung stattfinden kann, so dass die Effizienz der Fertigung leidet. Ein weiterer Nachteil der beschriebenen Vorgehensweise, d.h. der Wahl höherer Heiztemperaturen der Heizplatte, ist der erhöhte Energiebedarf des Verfahrens.

Vor diesem Hintergrund sind für die industrielle Fertigung zur Verfügung stehende Vorrichtungen zur additiven Fertigung, sofern sie überhaupt dieses Ausstattungsmerkmal aufweisen, typischerweise mit Heizplatten ausgerüstet, die das jeweilige Bauteil auf Temperaturen von maximal 500 °C aufheizen können, wobei die Heizplattentemperaturen regelmäßig auf ≤ 200 °C beschränkt sind.

Ein Beispiel für ein Einsatzgebiet, für das sich die additive Fertigung im besonderen Maße eignet, ist aufgrund der geringen Losgrößen der Werkzeugbau. Aufgrund ihres Eigenschaftsspektrums und ihrer hohen Härte ist zu diesem Zweck beispielsweise der Stahl, der unter der Werkstoffnummer 1.2709 in der Stahl Eisenliste geführt wird, im Einsatz. Dieser Stahl zeichnet sich durch einen geringen Kohlenstoffgehalt von unter 0,03 Masse-% und eine damit einhergehende gute Schweißbarkeit aus. Schweißbarkeit ist ein wichtiges Kriterium für die Beurteilung der Eignung für die additive Fertigung.

Daneben gibt es neue Entwicklungen auf Basis des Stahls unter der Werkstoffnummer 1.2709 mit der Bezeichnung "Corrax AM" der Firma Uddeholm sowie "AMPO789" der Firma Böhler. Diese Stähle weisen ebenfalls geringe Kohlenstoffgehalte von unter 0,03 Masse-% und damit eine gute Schweißbarkeit auf. Durch zusätzliches Zulegieren von Chrom von um die 12 Masse-% sind diese Neuentwicklungen im Gegensatz zu dem Stahl unter der Werkstoffnummer 1.2709 korrosionsbeständig. Jedoch weisen sie nach einer für die additive Fertigung typischen schnellen Abkühlung eine Gefügehärte auf, die regelmäßig kleiner 40 HRC ist. Erst durch nachträgliches Warmauslagern wird eine Einsatzhärte von ca. 51 HRC erreicht.

Nachteilig an den zuvor genannten derzeit verwendeten Werkzeugstählen für die additive Fertigung ist ferner, dass diese Elemente wie Nickel und Cobalt in der Legierung enthalten. Sowohl Nickel als auch Cobalt sind als karzinogen eingestuft. Die Verwendung des feinen Stahlpulvers aus den derzeitig verwendeten Werkzeugstählen für die additive Fertigung, das typischerweise Partikeldurchmesser der Stahlpartikel von unter 100 μm aufweist, kann trotz entsprechender Sicherheitsvorkehrungen zu einer nicht unerheblichen Belastung der Personen führen, die mit dem Pulver zur Vorbereitung der additiven Fertigung sowie im Post-Processing in Kontakt kommen.

Werkzeugstähle mit einer höheren Härte, wie der bereits weiter oben genannte stickstofflegierte Stahl, der unter der Werkstoffnummer 1.4108 im Stahl-Eisenblatt geführt wird, weisen den Nachteil auf, dass der Stickstoffgehalt von 0,3 bis 0,4 Massen-% nur durch druckunterstütztes Aufsticken erreicht werden kann und sind aufgrund ihres Kohlenstoffanteils von mindestens 0,25 Masse-% schlechter schweißbar. Die Verwendung eines solchen stickstofflegierten Stahls mit einem Kohlenstoffanteil von mindestens 0,25 Masse-% für die additive Fertigung ist nicht ohne weiteres möglich, denn aufgrund der schnellen, prozessbedingt hohen Abkühlung kommt es zu hohen thermischen Spannungen zwischen den einzelnen bei der additiven Fertigung aufgetragenen und aufgeschmolzenen Schichten, die die Gefahr einer Rissbildung im Bauteil erhöhen. Ferner kann es beim Aufschmelzen eines solchen druckaufgestickten stickstofflegierten Stahlpulvers bei der additiven Fertigung aufgrund der geringeren Löslichkeit des Stickstoffs in der Stahlschmelze gegenüber dem Festkörper zu einem Ausgasen des Stickstoffs kommen. Gerade bei einem Stahl, der, wie der Stahl der Werkstoffnummer 1.4108, durch Druckaufsticken auf einen Stickstoffgehalt von 0,3 bis 0,4 Masse-% legiert wurde, liegt der Stickstoff im Festkörper zwangsgelöst vor und neigt beim Aufschmelzen des Stahlpulvers daher besonders zum Ausgasen.

Vor diesem Hintergrund hat sich die Aufgabe ergeben,

- ein Stahlpulver anzugeben, das die Erzeugung von hinsichtlich ihrer Härte, Verschleißbeständigkeit und Anlassbeständigkeit optimierten Bauteilen in einem additiven Verfahren ermöglicht, ohne dass dazu über den Stand der Technik hinausgehende fertigungstechnische Maßnahmen erforderlich sind,

- einen Stahl vorzuschlagen, der für die Erzeugung eines entsprechenden Stahlpulvers besonders geeignet ist, und

- ein Verfahren zu nennen, welches es erlaubt, durch additive Fertigung Bauteile von optimierter Härte, Verschleißbeständigkeit und Anlassbeständigkeit herzustellen.

Zur Lösung dieser Aufgabe hat die Erfindung ein Stahlpulver vorgeschlagen, das mindestens die in Anspruch 1 angegebenen Merkmale aufweist.

Die voranstehend angegebene Aufgabe wird gemäß der Erfindung auch durch den in Anspruch 10 angegebenen Stahl sowie die in Anspruch 11 angegebene Verwendung dieses Stahls gelöst.

Schließlich nennt die Erfindung in Anspruch 12 ein die voranstehend angegebene Aufgabe gleichfalls lösendes Verfahren.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes Stahlpulver für eine additive Fertigung eines Stahlbauteils ist demnach aus Stahlpartikeln gebildet, die aus einem Stahl erzeugt sind, der in Masse-%, aus

| | |
|---|---|
| C: | 0,1 - 0,5%, |
| N: | 0,1 - 0,5%, |
| Si: | $\leq 0,6$ %, |
| Mn: | 1,0 - 5,0 %, |
| Cr: | 11,5 - 15,0 %, |
| Mo: | 0,5 - 2,5 %, |

und als Rest aus Eisen und stahltypischen Verunreinigungen besteht, die in Summe höchstens 0,6 Masse-% betragen und zu den bis zu 0,05 % P , insbesondere bis zu 0,030 % P und bis zu 0,05 % S, insbesondere bis zu 0,020 % S, zählen.

Ausgehend von der Zusammensetzung des Stahls mit der Werkstoffnummer 1.4108, der aus, in Masse-%, 0,25 - 0,35 % C, 0,3 - 0,4 % N, 14,0 - 16,0 % Cr, 0,85 - 1,1 % Mo, und Rest Fe und unvermeidbaren Verunreinigungen besteht, schlägt die Erfindung eine Stahllegierung vor, die derart modifiziert ist, dass sich diese für die Verwendung zur additiven Fertigung eignet, ohne dass es zu den oben genannten Nachteilen, wie Ausgasen des Stickstoffs und Spannungsrissbildung kommt. Ferner lassen sich mit einer derart modifizierten Legierung durch additive Fertigung Bauteile erzeugen, die bereits ohne Warmauslagern, eine Härte von mehr als 40 HRC, vorzugsweise mehr als 50 HRC, aufweisen. Die Härte und Verschleißbeständigkeit der fertigen Bauteile lässt sich durch optionales Tiefkühlen und/oder Anlassen nochmals weiter verbessern. Ferner weisen die fertigen Bauteile eine hohe Anlassbeständigkeit auf und können im Gegensatz zu typischen nichtrostenden martensitischen Stählen auch bei Temperaturen zwischen 480°C und 580°C problemlos eingesetzt werden. Darüber hinaus sind zudem sowohl das Stahlpulver für die additive Fertigung als auch die erzeugten Bauteile frei von karzinogenen Bestandteilen, wie Nickel und Cobalt.

Mit der Erfindung steht somit ein Stahlpulver zur Verfügung, das eine aus betriebstechnischer Sicht robuste und kostengünstige Verarbeitung mit konventionellen Anlagen zur additiven Fertigung ermöglicht, bei denen neben den üblichen Heizplatten keine weiteren speziellen Erwärmungseinrichtungen vorgesehen sind. Es ist ferner nicht notwendig den Stickstoffgehalt des Stahlpulvers durch kostenintensives Druckaufsticken einzustellen. Des Weiteren ist die Abwesenheit karzinogener Legierungsbestandteile, wie Cobalt und Nickel, ebenfalls unter betriebssicherheitstechnischen Gesichtspunkten vorteilhaft.

Der erfindungsgemäße Stahl weist während des Druckvorgangs ein überwiegend austenitisches Gefüge auf, wobei bis zu 2 Vol.-% Martensit und/oder Bainit im Gefüge vorhanden sein können. Derart begrenzte Martensit- und/oder Bainitgehalte beeinflussen das Rissverhalten des erfindungsgemäßen Werkstoffs auch dann nicht negativ, wenn bei der additiven Verarbeitung Wärmespannungen im sich verfestigenden bzw. verfestigten Bauteil auftreten. Der Grund hierfür sind hohe Restaustenitanteile von mehr als 10 Vol.-%, die auch noch nach der Abkühlung im Gefüge eines aus erfindungsgemäßem Stahlpulver additiv gefertigten Bauteils vorhanden sind. Diese hohen Restaustenitanteile wirken aufgrund ihrer guten Verformbarkeit der Entstehung von Rissen entgegen. Typischerweise beträgt der Restaustenitanteil im Gefüge eines aus dem erfindungsgemäßen Stahlpulver additiv gefertigten Bauteils bis zu 50 Vol.-%.

Nach Abschluss des Druckvorganges besteht das Gefüge eines aus erfindungsgemäßem Stahlpulver additiv erzeugten Bauteils somit bis auf geringe Anteile von höchstens 2 Vol.-% an sonstigen, technisch unvermeidbaren Bestandteilen typischerweise aus Martensit, sowie jeweils einem hohen Anteil aus Restaustenit von mehr als 10 Vol.-%. Die Zusammensetzung des Gefüges bedingt eine hohe Härte des erhaltenen Bauteils. Durch optionales Tiefkühlen und/oder zusätzliches Anlassen des Bauteils können die mit Blick auf seine Gebrauchseigenschaften oder seine Bearbeitbarkeit jeweils gewünschten mechanischen Eigenschaften eingestellt werden.

Die aus erfindungsgemäß legiertem Stahlpulver durch ein additives Fertigungsverfahren erzeugten Bauteile lassen sich unkompliziert optional tiefkühlen und/oder anlassen. Dementsprechend kann der Verwender des erfindungsgemäßen Stahlpulvers die von ihm additiv gefertigten Bauteile in den schon bei ihm vorhandenen, für ein konventionelles Tiefkühlen oder Anlassen ausgerüsteten Aggregaten problemlos der jeweils zur Einstellung des gewünschten Eigenschaftsprofils erforderlichen Behandlung unterziehen.

Kohlenstoff ("C") ist im Stahl der Stahlpartikel eines erfindungsgemäßen Stahlpulvers in Gehalten von 0,1 - 0,5 Masse-% enthalten, um die Härte des Stahls zu steigern und durch Bildung von Karbiden zur Erhöhung der Verschleißbeständigkeit beizutragen. Um diesen Effekt zu erreichen, sind mindestens 0,1 Masse-% C erforderlich, wobei sich die positive Wirkung von C besonders sicher nutzen lässt, wenn der C-Gehalt mindestens 0,20 Masse-% beträgt. In zu hoher Konzentration würde C jedoch die Zähigkeit zu stark erhöhen, so dass sich keine ausreichende Härte erzielen lässt. Daher ist der C-Gehalt auf höchstens 0,5 Masse-% beschränkt, wobei sich ungünstige Auswirkungen der Anwesenheit von C insbesondere dadurch vermeiden lassen, dass der C-Gehalt auf höchstens 0,45 Masse-% begrenzt wird.

Stickstoff ("N") ist im Stahl der Stahlpartikel eines erfindungsgemäßen Stahlpulvers in Gehalten von 0,1 bis 0,5 Masse-% vorhanden, um durch Bildung von Nitriden die Härte und Anlassbeständigkeit des Stahls zu erhöhen sowie die Verschleißbeständigkeit sowie die Korrosionsbeständigkeit zu verbessern. Die vorteilhafte Wirkung von N stellt sich besonders betriebssicher ein, wenn der N-Gehalt mindestens 0,10 Masse-% beträgt. Die positiven Wirkungen des N lassen sich bei Gehalten von höchstens 0,30 Masse-% besonders effektiv nutzen.

Es hat sich herausgestellt, dass eine Härtesteigerung des Stahls besonders betriebssicher erreicht werden kann, wenn für die Summe der Gehalte %C an C und %N an N gilt: $0,2\ \% \leq \%C + \%N \leq 0,8\ \%$. Bei Werten unterhalb von 0,2 % kann die benötigte Härte aufgrund zu geringer Martensitanteile im Gefüge nicht erreicht werden. Besonders effektiv lässt sich die benötigte Härte bei Werten von mindestens 0,3 % erreichen. Für Werte oberhalb von 0,8 % kann aufgrund der Stabilisierung von zu viel Restaustenit ebenfalls keine ausreichende Härte im Gefüge erreicht werden, wobei sich Werte von höchstens 0,6 % für die Härtesteigerung als besonders effektiv erwiesen haben.

Silizium ("Si") ist im erfindungsgemäß legierten Stahl der Stahlpartikel des erfindungsgemäßen Stahlpulvers in Gehalten von $\leq 0,6$ Masse-% vorhanden. Si ist ein Mischkristallbildner und steigert die Durchvergütbarkeit des Stahls, würde aber bei zu hohen Gehalten die Zähigkeit des Stahls beeinträchtigen. Besonders sicher lassen sich die Vorteile der Anwesenheit von Si nutzen, wenn der Si-Gehalt mindestens 0,1 Masse-%, insbesondere mindestens 0,10 Masse-%, beträgt. Negative Auswirkungen der Anwesenheit von Si lassen sich sicher dadurch vermeiden, dass der Si-Gehalt auf höchstens 0,6 Masse-%, insbesondere höchstens 0,40 Masse-%, beschränkt wird. Darüber hinaus wirkt sich Si bei der Erzeugung des erfindungsgemäßen Stahlpulvers günstig aus, indem es zur Viskosität der zu dem Stahlpulver verdüsten Stahlschmelze beiträgt

Mangan ("Mn") steigert in Gehalten von 1,0 bis 5,0 Masse-% im Stahl der Stahlpartikel eines erfindungsgemäßen Stahlpulvers ebenfalls die Durchvergütbarkeit und trägt zur Löslichkeit des Stickstoffs in der Stahlschmelze bei, so dass die Zulegierung der erfindungsgemäß vorgesehenen hohen N Gehalte in Folge der Anwesenheit von Mn erleichtert wird und kein Druckaufsticken notwendig ist. Dies gilt insbesondere bei Mn-Gehalten von mindestens 2,0 Masse-%, wobei bei Gehalten von höchstens 4,0 Masse-% die Wirkung von Mn besonders effektiv eintritt.

Chrom ("Cr") ist im Stahl der Stahlpartikel des erfindungsgemäßen Stahlpulvers in Gehalten von 11,5 - 15,0 Masse-% vorhanden, um durch Bildung von Karbiden die Härte des Stahls zu erhöhen und die Verschleißbeständigkeit zu verbessern. Die Anwesenheit von Chrom in den genannten Gehalten führt ferner zu einer Verbesserung der Korrosionsbeständigkeit durch Ausbildung einer Chromoxidschicht auf dem aus dem erfindungsgemäßen Stahlpulver durch additive Fertigung gefertigten Bauteil. Diese positiven Einflüsse der Anwesenheit von Cr lassen sich bei Gehalten von mindestens 11,50 Masse-% besonders sicher nutzen, wobei bei Gehalten von höchstens 15,0 Masse-%, insbesondere höchstens 14,50 Masse-%, die Wirkung von Cr besonders effektiv eintritt.

Molybdän ("Mo") ist in Gehalten von 0,5 - 2,5 Masse-% im Stahl der Stahlpartikel des erfindungsgemäßen Stahlpulvers zur Verbesserung der Korrosionsbeständigkeit enthalten und erhöht die Beständigkeit gegen Lochkorrosion. Die positiven Einflüsse der Anwesenheit von Mo lassen sich bei Gehalten von mindestens 0,50 Masse-%, insbesondere mindestens 0,80 Masse-%, besonders sicher nutzen, wobei bei Gehalten von höchstens 2,50 Masse-%, insbesondere höchstens 2,30 Masse-%, die Wirkung von Mo besonders effektiv eintritt.

Die Pitting Resistance Equivalent Number "PREN" drückt den Einfluss der Legierungselemente Cr, Mo und N auf die Korrosionsbeständigkeit des Stahls der Stahlpartikel des erfindungsgemäßen Stahlpulvers aus, wobei die Erfindung den PREN-Wert gemäß der Gleichung

$$PREN = \%Cr + 3{,}3 \text{ x } \%Mo + 16 \text{ x } \%N,$$

mit %Cr = jeweiliger Cr-Gehalt, %Mo = jeweiliger Mo-Gehalt und %N = jeweiliger N-Gehalt des Stahls, berechnet. Indem die Cr-, Mo- und N-Gehalte des erfindungsgemäßen Stahls so abgestimmt werden, dass sich PREN-Werte von mindestens 10, insbesondere mehr als 12, ergeben, lässt sich eine optimierte Korrosionsbeständigkeit sichern, wobei PREN-Werte von mindestens 13, insbesondere mindestens 14 oder mindestens 15, sich hier als besonders vorteilhaft erweisen.

Zu den herstellungsbedingt unvermeidbaren Verunreinigungen, deren Gehalte in Summe höchstens 0,6 Masse-% betragen dürfen, gehören Gehalte an allen Legierungselementen, die im Zuge seiner Erschmelzung und Weiterverarbeitung in den Stahl gelangen, dabei jedoch jeweils in Gehalten vorliegen, in denen sie keine Wirkung in Bezug auf die hier genutzten Eigenschaften des erfindungsgemäß für die Stahlpartikel des Stahlpulvers ausgewählten Stahls haben. Zu den Verunreinigungen gehören Gehalte an Phosphor ("P") von bis zu 0,05 Masse-%, und an Schwefel ("S") von höchstens 0,05 Masse-%, insbesondere höchstens 0,03 Masse-%.

Indem mehr als 85 Masse-%, insbesondere mehr als 90 Masse-%, der Stahlpartikel eines erfindungsgemäßen Stahlpulvers einen Partikeldurchmesser von 10 - 65 μm aufweisen, kann sichergestellt werden, dass mit solchem Stahlpulver mit konventionellen Vorrichtungen der eingangs erläuterten Art durch additive Fertigung zuverlässig Bauteile erzeugt werden können. Die Selektion der geeignet großen Stahlpartikel kann in üblicher Weise durch Sieben und Sichten erfolgen. Typischerweise werden dabei bis zu 2 Masse-% an Körnern, deren Durchmesser oberhalb des für die Partikeldurchmesser erfindungsgemäß vorgegebenen Bereichs liegen, und bis zu 5 Masse-% an Körnern zugelassen, deren Durchmesser unterhalb des erfindungsgemäßen Partikeldurchmesserbereichs liegen.

Den voranstehenden Erläuterungen entsprechend, schlägt die Erfindung, einen Stahl für die Erzeugung eines Stahlpulvers zur Herstellung von Stahlbauteilen durch ein additives Verfahren, der in Masse-%, aus C: 0,1 - 0,5 %, N: 0,1 - 0,5 %, Si: ≤ 0,6 %, Mn: 1,0 - 5,0 %, Cr: 11,5 - 15,0 %, Mo: 0,5 - 2,5 % und als Rest aus Eisen und stahltypischen Verunreinigungen besteht, die in Summe höchstens 0,6 Masse-% betragen, und zu den bis zu 0,05 % P, insbesondere bis zu 0,03 % P, und bis zu 0,05 % S, insbesondere bis zu 0,03 % S, zählen, vor.

Ferner schlägt die Erfindung, die Verwendung eines solchen Stahls für die Erzeugung eines Stahlpulvers zur Herstellung von Stahlbauteilen durch ein additives Verfahren vor.

Aufgrund der durch die Legierung des erfindungsgemäßen Stahls erzielten Eigenschaften ist das daraus erzeugte erfindungsgemäße Stahlpulver für die Verwendung zur Herstellung von Bauteilen, die sich durch eine hohe Härte, Verschleißbeständigkeit und Anlassbeständigkeit, durch ein additives Fertigungsverfahren auszeichnen, im besonderen Maße geeignet. So lassen sich mit dem erfindungsgemäßem Stahlpulver aufgrund seiner hohen Anlassbeständigkeit durch additive Fertigung nicht nur Bauteile erzeugen, die üblicherweise aus Kaltarbeitsstählen hergestellt werden, sondern auch solche, die üblicherweise aus Warmarbeitsstählen hergestellt werden. Ferner eignen sich die aus der erfindungsgemäßen Legierung des Stahls durch additive Fertigung erzeugten Bauteile auch für medizinische Zwecke und sind im Bereich der Lebensmittelindustrie einsetzbar, da die erfindungsgemäße Legierung des Stahls keine karzinogenen Legierungselemente, wie Nickel oder Cobalt, enthält.

Das erfindungsgemäße Verfahren zum Herstellen eines Stahlbauteils in einem additiven Verfahren, bei dem in einem mehrfach wiederholten Arbeitsablauf auf einer Heizplatte, die auf eine Heiztemperatur aufgeheizt ist, zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, sieht vor, dass ein erfindungsgemäß beschaffenes Stahlpulver verwendet wird, dass das aus dem erfindungsgemäßen Stahlpulver durch additive Fertigung erzeugte Bauteil während der Herstellung mittels der Heizplatte auf einer Temperatur gehalten wird, die 20 °C bis 225 °C beträgt.

Nach der Herstellung des Bauteils wird das jeweilige fertig geformte Bauteil optional einer Tiefkühlung auf eine Temperatur unterhalb von -50°C unterzogen, um seine Festigkeit und Zähigkeit einzustellen. Dabei kann das Bauteil beispielsweise auf eine Temperatur zwischen -50°C und -200°C abgekühlt werden. Die Tiefkühlung wird in konventioneller Weise über eine Dauer durchgeführt, die in Abhängigkeit von der Bauteilgröße ausreicht, um die mit der Tiefkühlung angestrebte Einstellung des Gefüges und der Eigenschaften über das gesamte Volumen des Bauteils optimal gleichmäßig verteilt zu erhalten. In der Praxis typischerweise für die Tiefkühlung vorgesehene Behandlungsdauern betragen mindestens 30 min. Bei der Tiefkühlung wandelt sich ein Teil des im Bauteil vorhandenen Restaustenits in Martensit um, so dass das Bauteil nach dem Tiefkühlen einen Martensitanteil von mehr als 90 Vol% aufweist. Der Anteil des Restaustenits im Bauteil nach dem Tiefkühlen beträgt weniger als 10 Vol%.

Schließlich wird das Bauteil nach dem Tiefkühlen optional einer Anlassbehandlung bei einer 100 - 600 °C, vorzugsweise 300 bis 580°C, betragenden Anlasstemperatur unterzogen. Diese Anlassbehandlung wird ebenfalls über eine Dauer durchgeführt, die abhängig von der Größe und dem Volumen des jeweiligen Bauteils ist, um die sich im Zuge der additiven Fertigung bereits einstellende Festigkeitssteigerung durch Sonderkarbid- und Sondernitridbildung gezielt zu unterstützen. Typischerweise liegt die Dauer der Anlassbehandlung im Bereich von 15 min bis 120 min. Durch eine zwei- oder mehrfache Wiederholung kann die Wirkung der Anlassbehandlung in an sich bekannter Weise verstärkt werden.

Die Erfindung ermöglicht es, Bauteile aus einem nickel- und cobaltfreien nichtrostenden martensitischen Stahl durch additive Fertigung herzustellen, da es im Rahmen der erfindungsgemäßen Legierungsvorschrift problemlos möglich ist, durch legierungstechnische Maßnahmen den Martensitgehalt sowie den Restaustenitgehalt in dem durch additive Fertigung direkt erhaltenen Bauteil ohne Durchführen weiterer Wärmebehandlungen derart einzustellen, dass der Martensitgehalt mindestens 45 Vol% und höchstens 88 Vol% und der Restaustenitgehalt mindestens 10 Vol% und höchstens 50 Vol% beträgt. Hierdurch ist gewährleistet, dass es während der additiven Fertigung nicht zu der bereits oben genannten Entstehung von thermisch bedingten Spannungen und dadurch ausgelösten Rissen im Bauteil kommt.

Die Einsatzhärte des fertigen Bauteils von mindestens 50 HRC, vorzugsweise mindestens 55 HRC, kann direkt nach der additiven Fertigung des Bauteils bereits vorliegen oder durch das oben im Zusammenhang mit dem erfindungsgemäßen Verfahren beschriebene optionale Tiefkühlen des Bauteils und der damit verbundenen Umwandlung von Teilen des Restaustenits in Martensit erreicht werden. Eine optional anschließende Anlassbehandlung führt zu einer vorteilhaften weiteren Härtesteigerung des Bauteils durch die Bildung von Sonderkarbiden und -nitriden, wie oben erläutert.

Nachfolgend wird die Erfindung anhand von Ausführungsbeispielen näher erläutert. Es zeigt:

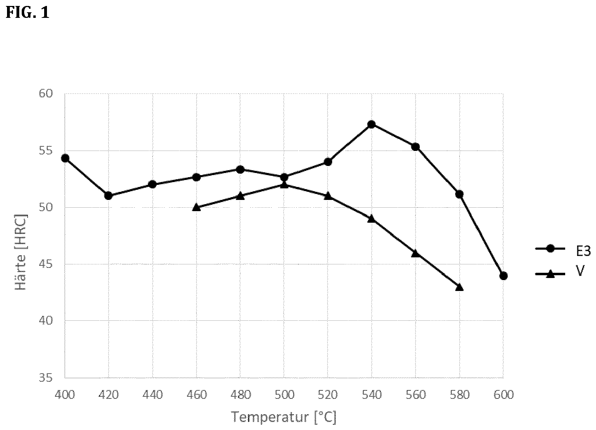

Fig. 1    ein Diagramm, in dem das Anlassverhalten bei einer einmal über eine Dauer von 90 Minuten durchgeführten Anlassbehandlung des erfindungsgemäßen Stahls E3 sowie des Vergleichsstahls V, dargestellt ist.

Zur Erprobung der Erfindung sind erfindungsgemäß legierte Stähle E1 - E3 und ein Vergleichsstahl V erschmolzen und in bekannter Weise im Gasstrom jeweils zu Stahlpulver verdüst und auf eine Korngröße von 10 - 63 $\mu$m klassiert worden. Die Zusammensetzungen der erfindungsgemäß legierten Stähle E1 bis E3 und des Vergleichsstahls V sind in Tabelle 1 angegeben.

Das jeweilige Stahlpulver wurde mit einer Energiedichte von etwa 65 J/mm$^3$ auf einer EOS M290 durch additive Fertigung zu einem Bauteil verarbeitet. Die Versuche wurden dabei mit einer Bauteilheizung von 150°C durchgeführt. Die Härte der Bauteile wurde direkt nach der additiven Fertigung bestimmt und kann Tabelle 1 entnommen werden.

Für ein Bauteil aus dem erfindungsgemäßen Stahl E3 wurden die mechanischen Eigenschaften im Zug- und Kerbschlagversuch ermittelt. Dabei wurden drei unterschiedliche Zustände des Bauteils überprüft. Die Prüfung erfolgte in folgenden Zuständen:

i) direkt nach der additiven Fertigung,

ii) nach zusätzlichem Tiefkühlen auf -70°C (TK),

iii) nach zusätzlichem Anlassen bei 540°C ohne vorheriges Tiefkühlen, und

iv) nach zusätzlichem Tiefkühlen auf -70°C mit anschließendem Anlassen bei 540°C für 90 Minuten.

Die jeweils erhaltenen mechanischen Eigenschaften sind in Tabelle 2 dargestellt. Tabelle 2 kann entnommen werden, dass eine zusätzliche Anlassbehandlung, ein zusätzliches Tiefkühlen oder eine Kombination aus Anlassbehandlung und Tiefkühlen zu einer weiteren Härtesteigerung des Bauteils führt. Dabei wird die höchste Härte durch eine Kombination von Tiefkühlen und Anlassen erreicht. Tabelle 2 kann ebenfalls entnommen werden, dass die mechanischen Eigenschaften des Bauteils aus dem erfindungsgemäßen Stahl E3 sich durch eine zusätzliche Anlassbehandlung und/oder Tiefkühlung für den jeweiligen Einsatzzweck optimieren lassen.

Das Anlassverhalten des erfindungsgemäßen Stahls E3 sowie des Vergleichsstahls V ist in Figur 1 dargestellt. Der erfindungsgemäße Stahl E3 wurde direkt nach seiner Herstellung durch additive Fertigung einer Tiefkühlung auf -70°C und anschließend einer Anlassbehandlung von 90 Minuten bei unterschiedlichen Temperaturen unterzogen. Figur 1 kann entnommen werden, dass der erfindungsgemäße Stahl E3 ein Sekundärhärtemaximum von maximal 57 HRC bei 540°C aufweist. Dabei bestätigt sich, dass das zusätzliche Durchführen einer Kombination aus Tiefkühlen und Anlassbehandlung zu einer weiteren deutlichen Härtesteigerung des erfindungsgemäßen Stahls E3 führt. Ein Vergleich mit dem Vergleichsstahl V zeigt, dass dieser bereits bei geringeren Temperaturen von ca. 500°C ein Sekundärhärtemaximum von ca. 52 HRC aufweist und anschließend die Härte mit zunehmender Anlasstemperatur abnimmt. Eine Härtesteigerung erfolgt hier im Gegensatz zu dem erfindungsgemäßen Stahl E3 erst durch die Anlassbehandlung. Ein Tiefkühlen führt beim Vergleichsstahl V zu keiner Härtesteigerung. Direkt nach der additiven Fertigung weist der Vergleichsstahl V im Vergleich zu den erfindungsgemäßen Stählen keine ausreichende Härte auf (siehe hierzu Tabelle 1).

Mit der durch die erfindungsgemäße Legierung verliehenen Eigenschaftskombination eigneten sich die erfindungsgemäß aus den Stählen E1-E3 erzeugten Stahlpulver zur Verarbeitung in konventionellen Anlagen zur additiven Fertigung von Bauteilen, zu denen beispielsweise so genannte "Selective Laser Melting" ("3D-Druck / SLM-Verfahren") Anlagen gehören.

Besondere Maßnahmen zur Erwärmung und zum Halten der aus den erfindungsgemäßen Stählen E1 - E3 erzeugten Bauteilen bei hohen Temperaturen, um die Entstehung von thermisch bedingten Spannungen und dadurch ausgelösten Rissen zu minimieren, waren nicht erforderlich. Stattdessen wiesen die Bauteile, die aus Stahlpulvern erzeugt worden sind, deren Stahlpartikel aus den erfindungsgemäß legierten Stählen E1 - E3 bestanden, direkt nach der additiven Fertigung bereits ein Gefüge auf, das aus Martensit mit hohen Anteilen an Restaustenit besteht.

**Tabelle 1**

| Stahl | C | N | Si | Mn | Cr | Mo | C+N | Härte direkt nach additiver Fertigung [HRC] | Härte nach Tiefkühlen auf -70°C [HRC] |
|---|---|---|---|---|---|---|---|---|---|
| E1 | 0,15 | 0,10 | 0,3 | 2,6 | 12,8 | 1,1 | 0,25 | 52 | 52 |
| E2 | 0,40 | 0,17 | 0,2 | 2,6 | 13,5 | 1,1 | 0,59 | 35 | 56 |
| E3 | 0,28 | 0,18 | 0,2 | 2,6 | 12,8 | 1,1 | 0,46 | 51 | 55 |
| V | 0,60 | 0,30 | 0,15 | 3 | 11,5 | 1,8 | 0,90 | <10 | <10 |

**Tabelle 2**

| Stahl | Zustand | Härte [HRC] | $Rp_{0,2}$ [MPa] | Rm [MPa] | $A_{5,65}$ [%] |
|---|---|---|---|---|---|
| E3 | nach additiver Fertigung | 51 | 600 | 1150 | 5 |
| E3 | nach zusätzlichem Anlassen bei 540°C | 52 | 900 | 1300 | 9 |
| E3 | nach zusätzlichem Tiefkühlen auf -70°C | 55 | 1560 | 1650 | 0,1 |
| E3 | nach zusätzlichem Tiefkühlen auf -70°C und zusätzlichem Anlassen bei 540°C | 57 | 1550 | 1850 | 12 |

**Patentansprüche**

1. Stahlpulver für eine additive Fertigung eines Stahlbauteils, wobei das Stahlpulver aus Stahlpartikeln eines Stahls gebildet ist, in Masse-%, aus

| | |
|---|---|
| C: | 0,1 - 0,5%, |
| N: | 0,1 - 0,5%, |
| Si: | ≤ 0,6 %, |
| Mn: | 1,0 - 5,0 %, |
| Cr: | 11,5 - 15,0%, |
| Mo: | 0,5 - 2,5 %, |

und als Rest aus Eisen und stahltypischen Verunreinigungen besteht, die in Summe höchstens 0,6 Masse-% betragen und zu den bis zu 0,05 % P und bis zu 0,05 % S zählen.

2. Stahlpulver nach Anspruch 1, **dadurch gekennzeichnet, dass** für die Summe der Gehalte %C an C und %N an N gilt: 0,2 % ≤ %C + %N ≤ 0,8 %.

3.  Stahlpulver nach einem der voranstehenden Ansprüche, **dadurch gekennzeichnet, dass** der C-Gehalt des Stahlpulvers 0,20 - 0,45 Masse-% beträgt.

4.  Stahlpulver nach einem der voranstehenden Ansprüche, **dadurch gekennzeichnet, dass** der N-Gehalt des Stahlpulvers 0,10 - 0,30 Masse-% beträgt.

5.  Stahlpulver nach einem der voranstehenden Ansprüche, **dadurch gekennzeichnet, dass** der Si-Gehalt des Stahls 0,1 - 0,6 Masse-% beträgt.

6.  Stahlpulver nach einem der voranstehenden Ansprüche, **dadurch gekennzeichnet, dass** der Mn-Gehalt des Stahls 2,0 - 4,0 Masse-% beträgt.

7.  Stahlpulver nach einem der voranstehenden Ansprüche, **dadurch gekennzeichnet, dass** der Cr-Gehalt 11,50 - 14,50 Masse-% beträgt.

8.  Stahlpulver nach einem der voranstehenden Ansprüche, **dadurch gekennzeichnet, dass** der Mo-Gehalt 0,50 - 2,50 Masse-% beträgt.

9.  Stahlpulver nach einem der voranstehenden Ansprüche, **dadurch gekennzeichnet, dass** mehr als 85 % der Stahlpartikel einen Partikeldurchmesser von 10 $\mu$m bis 65 $\mu$m aufweisen.

10. Stahl für die Erzeugung eines Stahlpulvers zur Herstellung von Stahlbauteilen durch ein additives Verfahren, der in Masse-%, aus

    | | |
    |---|---|
    | C: | 0,1 - 0,5 %, |
    | N: | 0,1 - 0,5 %, |
    | Si: | $\leq$ 0,6 %, |
    | Mn: | 1,0 - 5,0 %, |
    | Cr: | 11,5 - 15,0 %, |
    | Mo: | 0,5 - 2,5 %, |

    und als Rest aus Eisen und stahltypischen Verunreinigungen besteht, die in Summe höchstens 0,6 Masse-% betragen und zu den bis zu 0,05 % P und bis zu 0,05 % S zählen.

11. Verwendung eines Stahls nach Anspruch 10 zur Erzeugung von Stahlpartikeln eines Stahlpulvers zur Herstellung von Stahlbauteilen durch ein additives Verfahren.

12. Verfahren zum Herstellen eines Stahlbauteils in einem additiven Verfahren, bei dem in einem mehrfach wiederholten Arbeitsablauf auf einer Heizplatte, die auf eine Heiztemperatur aufgeheizt ist, zum Aufbau des Bauteils Stahlpulver aufgetragen wird, das aufgetragene Stahlpulver mittels Elektronen- oder Laserstrahl zu einer Schmelzenportion aufgeschmolzen wird und die jeweils aufgeschmolzene Schmelzenportion zu einem festen Abschnitt des Stahlbauteils abgekühlt wird, **dadurch gekennzeichnet,**

    - **dass** als Stahlpulver ein gemäß einem der Ansprüche 1 - 9 beschaffenes Stahlpulver verwendet wird,
    - **dass** das Bauteil während der Herstellung mittels der Heizplatte auf einer Temperatur gehalten wird, die 20 °C - 225 °C beträgt.

13. Verfahren gemäß Anspruch 12, **dadurch gekennzeichnet, dass** das fertig geformte Bauteil einer Tiefkühlung auf eine Temperatur unterhalb von -50°C und/oder einer Anlassbehandlung bei einer 100 - 600 °C betragenden Anlasstemperatur unterzogen wird.

14. Verfahren gemäß Anspruch 13, **dadurch gekennzeichnet, dass** die Dauer der durchgeführten Anlassbehandlung mindestens 15 min beträgt.

15. Verfahren gemäß Anspruch 13 oder 14, **dadurch gekennzeichnet, dass** die Dauer der Tiefkühlung mindestens 30 min beträgt

**FIG. 1**

Europäisches
Patentamt

European
Patent Office

Office européen
des brevets

# EUROPÄISCHER RECHERCHENBERICHT

**Nummer der Anmeldung**

EP 22 17 4451

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 102 615 449 B (UNIV SHANDONG) 18. Juni 2014 (2014-06-18) | 1-11 | INV. B22F10/28 |
| Y | * Absatz [0058] - Absatz [0068]; Beispiel 3 * <br> * Absatz [0005]; Ansprüche 1-2 * | 12-15 | B22F10/64 C21D1/25 C21D1/26 C21D6/04 |
| Y | DE 10 2018 201854 A1 (BOSCH GMBH ROBERT [DE]) 8. August 2019 (2019-08-08) * Absatz [0031] - Absatz [0059] * * Ansprüche 1-10 * | 12-15 | C22C33/02 C22C38/00 C22C38/02 C22C38/22 C22C38/38 |
| X <br> A | JP H07 316742 A (NIPPON STEEL CORP) 5. Dezember 1995 (1995-12-05) * Beispiel 1; Tabelle 1 * * Ansprüche 1-4 * | 10 <br><br> 1-9, 11-15 | B33Y10/00 B33Y40/20 B33Y70/00 |
| A | C. Y. YAP ET AL: "Review of selective laser melting: Materials and applications", JOURNAL OF APPLIED PHYSICS, Bd. 2, Nr. 4, 1. Dezember 2015 (2015-12-01), Seite 041101, XP055339348, 2 Huntington Quadrangle, Melville, NY 11747 ISSN: 0021-8979, DOI: 10.1063/1.4935926 * Kapitel I, A; Seite 2 * | 1-15 | |

**RECHERCHIERTE SACHGEBIETE (IPC)**

B22F
C21D
C22C
B33Y

Der vorliegende Recherchenbericht wurde für alle Patentansprüche erstellt

| Recherchenort | Abschlußdatum der Recherche | Prüfer |
|---|---|---|
| Den Haag | 30. September 2022 | Neibecker, Pascal |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 4451

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2022

| Im Recherchenbericht angeführtes Patentdokument | Datum der Veröffentlichung | Mitglied(er) der Patentfamilie | Datum der Veröffentlichung |
|---|---|---|---|
| CN 102615449 B | 18-06-2014 | KEINE | |
| DE 102018201854 A1 | 08-08-2019 | KEINE | |
| JP H07316742 A | 05-12-1995 | KEINE | |

Für nähere Einzelheiten zu diesem Anhang : siehe Amtsblatt des Europäischen Patentamts, Nr.12/82

EPO FORM P0461